# EUROPEAN PATENT APPLICATION

(11) **EP 2 224 382 A1**
(43) Date of publication of application: **01.09.2010**
(21) Application number: 09153403.2
(22) Date of filing: 23.02.2009
(51) Int. Cl.: G06Q 10/00, H04M 1/725

(54) **Electronic device and method of controlling same for integrating calendaring and clock functionality**

(71) Applicant: RESEARCH IN MOTION LIMITED, Waterloo, Ontario N2L 3W8 (CA)
(72) Inventor: Wilson, Sean D, Waterloo Ontario N2L 5Z5 (CA); Samuell, Charles Neville, Kitchener, Ontario N2G 429 (CA); Busheikin, Michael Jordan, London NW1 1EU (CA)
(74) Representative: Rickard, David John

(57) **Abstract**

A method of controlling an electronic device includes retrieving, from a memory at the electronic device, calendar-event records containing data for corresponding calendar events that satisfy a set of time constraints, the data for each calendar-event record including a start time and an end time for the corresponding calendar event, and for each of the retrieved calendar-event records, rendering on a display a corresponding calendar-event indicia positioned, based on the start time and the end time for that calendar event, within a predetermined rotary-clock region of the display.

## Description

The present application relates generally to electronic devices with calendaring functionality for tracking and managing calendar events such as appointments and meetings and for providing reminder notifications for such events.

Electronic devices, including portable electronic devices, have gained widespread use and can provide a variety of functions including, for example, telephonic, electronic messaging and other personal information manager (PIM) application functions. Portable electronic devices can include several types of devices for communication including mobile stations such as simple cellular telephones, smart telephones and wireless PDAs. These devices run on a wide variety of networks from data-only networks such as Mobitex and DataTAC to complex voice and data networks such as GSM/GPRS, CDMA, EDGE, UMTS and CDMA2000 networks.

Many portable electronic devices include a variety of applications for performing calendar and meeting-related functions, email functions, telephone functions, short message service (SMS) functions, Web browser functions and address book functions. Calendar applications allow users to track and manage appointments and meetings and to set reminders for such appointments and meetings. The information relating to meetings, for example, including the time, place and invitees, is commonly included in a calendar meeting event saved using the calendar application on an electronic device. This information is saved and may be selectively manipulated and displayed to the user in various formats to view monthly, weekly or daily calendar events in the calendar application.

Reminders for calendar events are typically set using a default reminder time of, for example, 15 minutes prior to the start time of the calendar event or by user-selection of a desired reminder time. Thus, it is common for a user to be reminded of a meeting or appointment only 15 minutes prior. This is particularly problematic in cases in which the calendar event is scheduled long in advance. To view details of the calendar event in advance of the reminder, the user must navigate through menus and submenus of the user interface to a suitable view in the calendar application. Of course, such navigation must be repeated regularly to view upcoming calendar events.

Improvements in providing calendar event information are therefore desirable.

### GENERAL

In a first aspect, there may be provided a method of method of controlling an electronic device. The method may comprise retrieving, from a memory at the electronic device, calendar-event records containing data for corresponding calendar events that satisfy a set of time constraints, the data for each calendar-event record including a start time and an end time for the corresponding calendar event, and for each of the retrieved calendar-event records, rendering on a display a corresponding calendar-event indicia positioned, based on the start time and the end time for that calendar event, within a predetermined rotary-clock region of the display.

In a further aspect, there may be provided an electronic device. The electronic device may comprise a display device, an input device, a memory device, a processor connected to the memory device, the input device, and the display device, and an application stored in the memory device for execution by the processor for retrieving, from the memory device, calendar-event records containing data for corresponding calendar events that satisfy a set of time constraints, the data for each calendar-event record including a start time and an end time for the corresponding calendar event, and for each of the retrieved calendar-event records, rendering on the display device a corresponding calendar-event indicia positioned, based on the start time and the end time for that calendar event, within a predetermined rotary-clock region of the display.

In a further aspect, there may be provided a computer readable medium having computer-readable code embodied therein for execution by a processor at a computing device for retrieving, from a memory at the electronic device, calendar-event records containing data for corresponding calendar events that satisfy a set of time constraints, the data for each calendar-event record including a start time and an end time for the corresponding calendar event, and for each of the retrieved calendar-event records, rendering on the display a corresponding calendar-event indicia positioned, based on the start time and the end time for that calendar event, within a predetermined rotary-clock region of the display.

Other aspects and features will become apparent to those ordinarily skilled in the art upon review of the following description of specific embodiments in conjunction with the accompanying figures.

### BRIEF DESCRIPTION OF THE DRAWINGS

Embodiments of the present disclosure will now be described, by way of example only, with reference to the attached Figures, wherein:
Figure 1 is a block diagram of an exemplary embodiment of a portable electronic device;
Figure 2 is an exemplary block diagram of a communication subsystem component of Figure 1;
Figure 3 is a block diagram of an exemplary implementation of a node of a wireless network;
Figure 4 is a block diagram illustrating components of an exemplary configuration of a host system that the portable electronic device can communicate with;
Figure 5 is a flowchart illustrating steps in a method of controlling an electronic device in accordance with an embodiment;
Figure 6 is an exemplary screen displayed on the display device of the electronic device showing details of a calendar event;
Figure 7 is an exemplary screen displayed on the display device of the electronic device; and
Figure 8 is another exemplary screen displayed on the display device of the electronic device.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to portable electronic devices. Examples of portable electronic devices include mobile or handheld wireless communication devices such as pagers, cellular phones, cellular smart-phones, wireless organizers, personal digital assistants, computers, laptops, handheld wireless communication devices, wirelessly enabled notebook computers and the like.

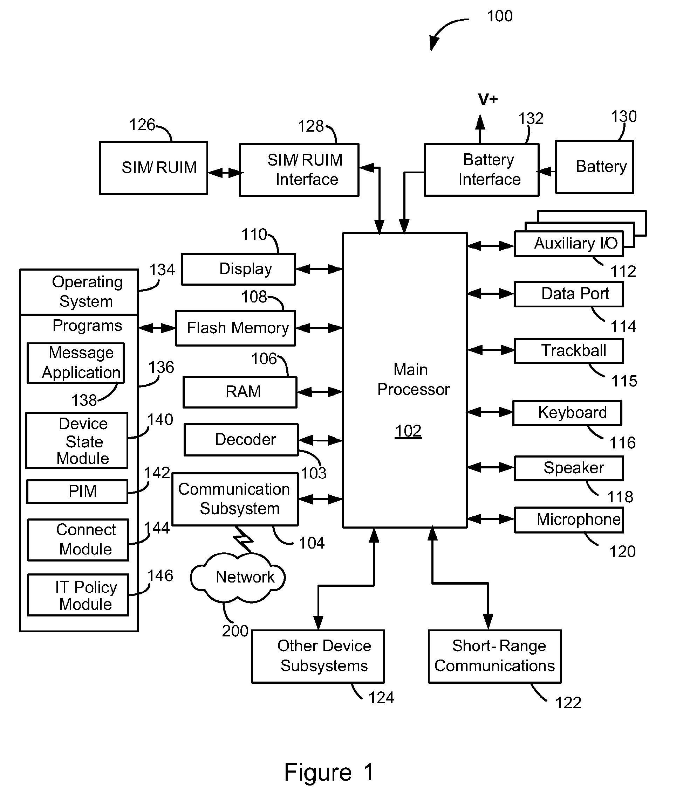

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). To aid the reader in understanding the structure of the portable electronic device and how it communicates with other devices and host systems, reference will now be made to Figures 1 through 4.

Referring first to Figure 1, shown therein is a block diagram of an exemplary embodiment of a portable electronic device 100. The portable electronic device 100 includes a number of components such as a main processor 102 that controls the overall operation of the portable electronic device 100. Communication functions, including data and voice communications, are performed through a communication subsystem 104. Data received by the portable electronic device 100 can be decompressed and decrypted by a decoder 103, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 104 receives messages from and sends messages to a wireless network 200. In this exemplary embodiment of the portable electronic device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with portable electronic device 100 is a GSM/GPRS wireless network in one exemplary implementation, other wireless networks may also be associated with the portable electronic device 100 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and third-generation (3G) networks such as EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems. The main processor 102 also interacts with additional subsystems such as a Random Access Memory (RAM) 106, a flash memory 108, a display device 110, an auxiliary input/output (I/O) subsystem 112, a data port 114, a trackball 115, a keyboard 116, a speaker 118, a microphone 120, short-range communications 122 and other device subsystems 124.

Some of the subsystems of the portable electronic device 100 perform communication-related functions, whereas other subsystems may provide "resident" or on-device functions. By way of example, the display device 110, the trackball 115 and the keyboard 116 may be used for both communication-related functions, such as entering a text message for transmission over the network 200, and device-resident functions such as a calculator or task list.

The portable electronic device 100 can send and receive communication signals over the wireless network 200 after network registration or activation procedures have been completed. Network access is associated with a subscriber or user of the portable electronic device 100. To identify a subscriber, a SIM/RUIM card 126 (i.e. Subscriber identity Module or a Removable User identity Module) is inserted into a SIM/RUIM interface 128 in order to communicate with a network. The SIM/RUIM card 126 is a type of a conventional "smart card" that can be used to identify a subscriber of the portable electronic device 100 and to personalize the portable electronic device 100, among other things. In the present embodiment, the portable electronic device 100 is not fully operational for communication with the wireless network 200 without the SIM/RUIM card 126. By inserting the SIM/RUIM card 126 into the SIM/RUIM interface 128, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 126 includes a processor and memory for storing information. Once the SIM/RUIM card 126 is inserted into the SIM/RUIM interface 128, it is coupled to the main processor 102. In order to identify the subscriber, the SIM/RUIM card 126 can include some user parameters such as an International Mobile Subscriber identity (IMSI). An advantage of using the SIM/RUIM card 126 is that a subscriber is not necessarily bound by any single physical portable electronic device. The SIM/RUIM card 126 may store additional subscriber information for a portable electronic device as well, including datebook (or calendar) information and recent call information. Alternatively, user identification information can also be programmed into the flash memory 108.

The portable electronic device 100 is a battery-powered device and includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the portable electronic device 100. Although current technology makes use of a battery, future technologies such as micro fuel cells may provide the power to the portable electronic device 100.

The portable electronic device 100 also includes an operating system 134 and software components 136 to 146 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications are installed on the portable electronic device 100 during its manufacture. Other software applications include a message application 138 that can be any suitable software program that allows a user of the portable electronic device 100 to send and receive electronic messages. Various alternatives exist for the message application 138 as is well known to those skilled in the art. Messages that have been sent or received by the user are typically stored in the flash memory 108 of the portable electronic device 100 or some other suitable storage element in the portable electronic device 100. In at least some embodiments, some of the sent and received messages may be stored remotely from the device 100 such as in a data store of an associated host system that the portable electronic device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the portable electronic device 100 is turned off or loses power.

The PIM 142 includes functionality for organizing and managing data items of interest to the user, such as, but not limited to, e-mail, contacts, calendar event records, voice mails, appointments, and task items. PIM applications include, for example, calendar, address book, tasks and memo applications. The PIM applications have the ability to send and receive data items via the wireless network 200. PIM data items may be seamlessly integrated, synchronized, and updated via the wireless network 200 with the portable electronic device subscriber's corresponding data items stored and/or associated with a host computer system. This functionality creates a mirrored host computer on the portable electronic device 100 with respect to such items. This can be particularly advantageous when the host computer system is the portable electronic device subscriber's office computer system.

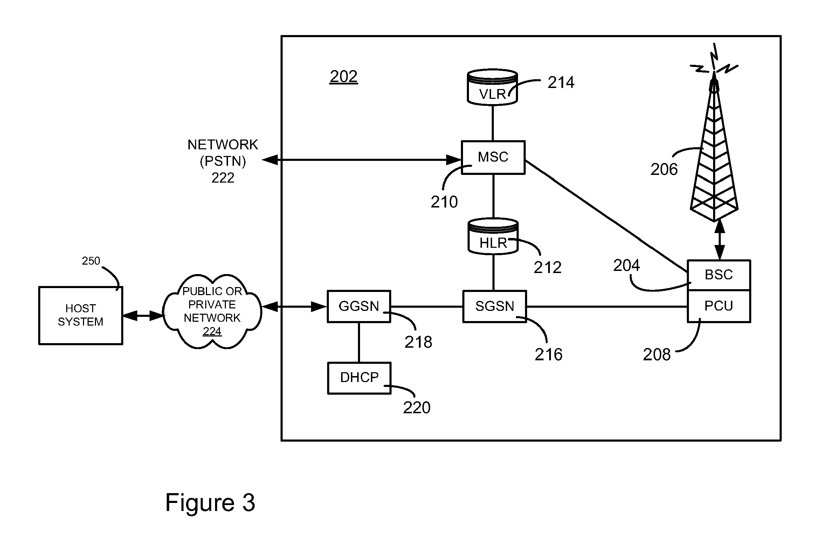

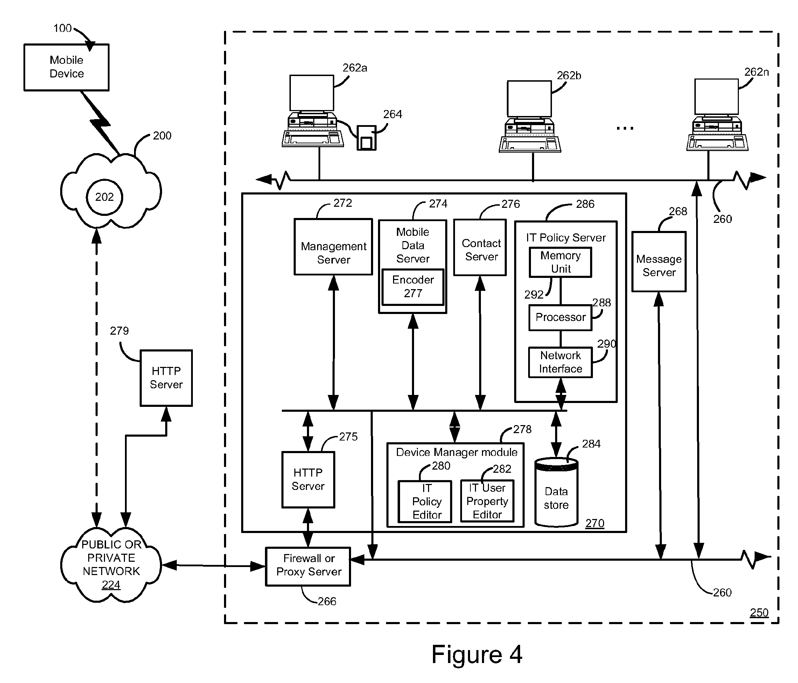

The portable electronic device 100 also includes a connect module 144, and an information technology (IT) policy module 146. The connect module 144 implements the communication protocols that are required for the portable electronic device 100 to communicate with the wireless infrastructure and any host system, such as an enterprise system, that the portable electronic device 100 is authorized to interface with. Examples of a wireless infrastructure and an enterprise system are given in Figures 3 and 4, which are described in more detail below.

The connect module 144 includes a set of APIs that can be integrated with the portable electronic device 100 to allow the portable electronic device 100 to use any number of services associated with the enterprise system. The connect module 144 allows the portable electronic device 100 to establish an end-to-end secure, authenticated communication pipe with the host system. A subset of applications for which access is provided by the connect module 144 can be used to pass IT policy commands from the host system to the portable electronic device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be provided on the portable electronic device 100 and still others can be installed on the portable electronic device 100. Such software applications can be third party applications, which are added after the manufacture of the portable electronic device 100. Examples of third party applications include games, calculators, utilities, etc.

The additional applications can be loaded onto the portable electronic device 100 through at least one of the wireless network 200, the auxiliary I/O subsystem 112, the data port 114, the short-range communications subsystem 122, or any other suitable device subsystem 124. This flexibility in application installation increases the functionality of the portable electronic device 100 and may provide enhanced on-device functions, communication-related functions, or both. For example, secure communication applications may enable electronic commerce functions and other such financial transactions to be performed using the portable electronic device 100.

The data port 114 enables a subscriber to set preferences through an external device or software application and extends the capabilities of the portable electronic device 100 by providing for information or software downloads to the portable electronic device 100 other than through a wireless communication network. The alternate download path may, for example, be used to load an encryption key onto the portable electronic device 100 through a direct and thus reliable and trusted connection to provide secure device communication.

The data port 114 can be any suitable port that enables data communication between the portable electronic device 100 and another computing device. The data port 114 can be a serial or a parallel port. In some instances, the data port 114 can be a USB port that includes data lines for data transfer and a supply line that can provide a charging current to charge the battery 130 of the portable electronic device 100.

The short-range communications subsystem 122 provides for communication between the portable electronic device 100 and different systems or devices, without the use of the wireless network 200. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, Web page download, or any other information is processed by the communication subsystem 104 and input to the main processor 102. The main processor 102 will then process the received signal for output to the display device 110 or alternatively to the auxiliary I/O subsystem 112. A subscriber may also compose data items, such as e-mail messages, for example, using the keyboard 116 in conjunction with the display device 110 and possibly the auxiliary I/O subsystem 112. The auxiliary subsystem 112 may include devices such as: a touch screen, mouse, track ball, infrared fingerprint detector, or a roller wheel with dynamic button pressing capability. The keyboard 116 is preferably an alphanumeric keyboard and/or telephone-type keypad. However, other types of keyboards may also be used. A composed item may be transmitted over the wireless network 200 through the communication subsystem 104.

For voice communications, the overall operation of the portable electronic device 100 is substantially similar, except that the received signals are output to the speaker 118, and signals for transmission are generated by the microphone 120. Alternative voice or audio I/O subsystems, such as a voice message recording subsystem, can also be implemented on the portable electronic device 100. Although voice or audio signal output is accomplished primarily through the speaker 118, the display device 110 can also be used to provide additional information such as the identity of a calling party, duration of a voice call, or other voice call related information.

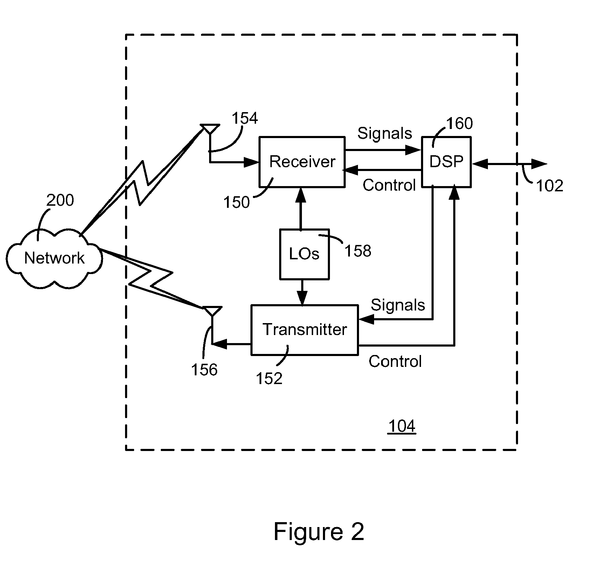

Referring now to Figure 2, an exemplary block diagram of the communication subsystem component 104 is shown. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the portable electronic device 100 is intended to operate. Thus, it should be understood that the design illustrated in Figure 2 serves only as one example.

Signals received by the antenna 154 through the wireless network 200 are input to the receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 may be adaptively controlled through automatic gain control algorithms implemented in the DSP 160.

The wireless link between the portable electronic device 100 and the wireless network 200 can contain one or more different channels, typically different RF channels, and associated protocols used between the portable electronic device 100 and the wireless network 200. An RF channel is a limited resource that should be conserved, typically due to limits in overall bandwidth and limited battery power of the portable electronic device 100.

When the portable electronic device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

Referring now to Figure 3, a block diagram of an exemplary implementation of a node 202 of the wireless network 200 is shown. In practice, the wireless network 200 comprises one or more nodes 202. In conjunction with the connect module 144, the portable electronic device 100 can communicate with the node 202 within the wireless network 200. In the exemplary implementation of Figure 3, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable portable electronic devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the portable electronic device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from portable electronic devices within its cell via the station 206. The fixed transceiver equipment normally performs such functions as modulation and possibly encoding and/or encryption of signals to be transmitted to the portable electronic device 100 in accordance with particular, usually predetermined, communication protocols and parameters, under control of its controller. The fixed transceiver equipment similarly demodulates and possibly decodes and decrypts, if necessary, any communication signals received from the portable electronic device 100 within its cell. Communication protocols and parameters may vary between different nodes. For example, one node may employ a different modulation scheme and operate at different frequencies than other nodes.

For all portable electronic devices 100 registered with a specific network, permanent configuration data such as a user profile is stored in the HLR 212. The HLR 212 also contains location information for each registered portable electronic device and can be queried to determine the current location of a portable electronic device. The MSC 210 is responsible for a group of location areas and stores the data of the portable electronic devices currently in its area of responsibility in the VLR 214. Further, the VLR 214 also contains information on portable electronic devices that are visiting other networks. The information in the VLR 214 includes part of the permanent portable electronic device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each portable electronic device 100. The SGSN 216 also performs security functions and access control for data traffic on the wireless network 200. The GGSN 218 provides internetworking connections with external packet switched networks and connects to one or more SGSN's 216 via an Internet Protocol (IP) backbone network operated within the network 200. During normal operations, a given portable electronic device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a portable electronic device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each portable electronic device 100 must be assigned to one or more APNs and portable electronic devices 100 cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a portable electronic device 100 is not using its PDP Context, the PDP Context can be de-allocated and the IP address returned to the IP address pool managed by the DHCP server 220.

Referring now to Figure 4, shown therein is a block diagram illustrating components of an exemplary configuration of a host system 250 that the portable electronic device 100 can communicate with in conjunction with the connect module 144. The host system 250 will typically be a corporate enterprise or other local area network (LAN), but may also be a home office computer or some other private system, for example, in variant implementations. In this example shown in Figure 4, the host system 250 is depicted as a LAN of an organization to which a user of the portable electronic device 100 belongs. Typically, a plurality of portable electronic devices can communicate wirelessly with the host system 250 through one or more nodes 202 of the wireless network 200.

The host system 250 comprises a number of network components connected to each other by a network 260. For instance, a user's desktop computer 262a with an accompanying cradle 264 for the user's portable electronic device 100 is situated on a LAN connection. The cradle 264 for the portable electronic device 100 can be coupled to the computer 262a by a serial or a Universal Serial Bus (USB) connection, for example. Other user computers 262b-262n are also situated on the network 260, and each may or may not be equipped with an accompanying cradle 264. The cradle 264 facilitates the loading of information (e.g. PIM data, private symmetric encryption keys to facilitate secure communications) from the user computer 262a to the portable electronic device 100, and may be particularly useful for bulk information updates often performed in initializing the portable electronic device 100 for use. The information downloaded to the portable electronic device 100 may include certificates used in the exchange of messages.

It will be understood by persons skilled in the art that the user computers 262a-262n will typically also be connected to other peripheral devices, such as printers, etc. which are not explicitly shown in Figure 4. Furthermore, only a subset of network components of the host system 250 are shown in Figure 4 for ease of exposition, and it will be understood by persons skilled in the art that the host system 250 will comprise additional components that are not explicitly shown in Figure 4 for this exemplary configuration. More generally, the host system 250 may represent a smaller part of a larger network (not shown) of the organization, and may comprise different components and/or be arranged in different topologies than that shown in the exemplary embodiment of Figure 4.

To facilitate the operation of the portable electronic device 100 and the wireless communication of messages and message-related data between the portable electronic device 100 and components of the host system 250, a number of wireless communication support components 270 can be provided. In some implementations, the wireless communication support components 270 can include a management server 272, a mobile data server (MDS) 274, a web server, such as Hypertext Transfer Protocol (HTTP) server 275, a contact server 276, and a device manager module 278. HTTP servers can also be located outside the enterprise system, as indicated by the HTTP server 275 attached to the network 224. The device manager module 278 includes an IT Policy editor 280 and an IT user property editor 282, as well as other software components for allowing an IT administrator to configure the portable electronic devices 100. In an alternative embodiment, there may be one editor that provides the functionality of both the IT policy editor 280 and the IT user property editor 282. The support components 270 also include a data store 284, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the portable electronic devices 100. The memory unit 292 can store functions used in implementing the IT policy as well as related data. Those skilled in the art know how to implement these various components. Other components may also be included as is well known to those skilled in the art. Further, in some implementations, the data store 284 can be part of any one of the servers.

In this exemplary embodiment, the portable electronic device 100 communicates with the host system 250 through node 202 of the wireless network 200 and a shared network infrastructure 224 such as a service provider network or the public Internet. Access to the host system 250 may be provided through one or more routers (not shown), and computing devices of the host system 250 may operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the portable electronic device 100. The wireless VPN router allows a VPN connection to be established directly through a specific wireless network to the portable electronic device 100. The wireless VPN router can be used with the Internet Protocol (IP) Version 6 (IPV6) and IP-based wireless networks. This protocol can provide enough IP addresses so that each portable electronic device has a dedicated IP address, making it possible to push information to a portable electronic device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the portable electronic device 100 in this alternative implementation.

Messages intended for a user of the portable electronic device 100 are initially received by a message server 268 of the host system 250. Such messages may originate from any number of sources. For instance, a message may have been sent by a sender from the computer 262b within the host system 250, from a different portable electronic device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly e-mail messages, within the organization and over the shared network infrastructure 224. Each user in the organization that has been set up to send and receive messages is typically associated with a user account managed by the message server 268. Some exemplary implementations of the message server 268 include a Microsoft Exchange™ server, a Lotus Domino™server, a Novell Groupwise™server, or another suitable mail server installed in a corporate environment. In some implementations, the host system 250 may comprise multiple message servers 268. The message server provides additional functions including PIM functions such as calendaring, contacts and tasks and supports data storage.

When messages are received by the message server 268, they are typically stored in a data store associated with the message server 268. In at least some embodiments, the data store may be a separate hardware unit, such as data store 284, that the message server 268 communicates with. Messages can be subsequently retrieved and delivered to users by accessing the message server 268. For instance, an e-mail client application operating on a user's computer 262a may request the e-mail messages associated with that user's account stored on the data store associated with the message server 268. These messages are then retrieved from the data store and stored locally on the computer 262a. The data store associated with the message server 268 can store copies of each message that is locally stored on the portable electronic device 100. Alternatively, the data store associated with the message server 268 can store all of the messages for the user of the portable electronic device 100 and only a smaller number of messages can be stored on the portable electronic device 100 to conserve memory. For instance, the most recent messages (i.e. those received in the past two to three months for example) can be stored on the portable electronic device 100.

When operating the portable electronic device 100, the user may wish to have e-mail messages retrieved for delivery to the portable electronic device 100. The message application 138 operating on the portable electronic device 100 may also request messages associated with the user's account from the message server 268. The message application 138 may be configured (either by the user or by an administrator, possibly in accordance with an organization's IT policy) to make this request at the direction of the user, at some pre-defined time interval, or upon the occurrence of some pre-defined event. In some implementations, the portable electronic device 100 is assigned its own e-mail address, and messages addressed specifically to the portable electronic device 100 are automatically redirected to the portable electronic device 100 as they are received by the message server 268.

The management server 272 can be used to specifically provide support for the management of, for example, messages, such as e-mail messages, that are to be handled by portable electronic devices. Generally, while messages are still stored on the message server 268, the management server 272 can be used to control when, if, and how messages are sent to the portable electronic device 100. The management server 272 also facilitates the handling of messages composed on the portable electronic device 100, which are sent to the message server 268 for subsequent delivery.

For example, the management server 272 may monitor the user's "mailbox" (e.g. the message store associated with the user's account on the message server 268) for new e-mail messages, and apply user-definable filters to new messages to determine if and how the messages are relayed to the user's portable electronic device 100. The management server 272 may also, through an encoder 273, compress messages, using any suitable compression technology (e.g. YK compression, and other known techniques) and encrypt messages (e.g. using an encryption technique such as Data Encryption Standard (DES), Triple DES, or Advanced Encryption Standard (AES)), and push them to the portable electronic device 100 via the shared network infrastructure 224 and the wireless network 200. The management server 272 may also receive messages composed on the portable electronic device 100 (e.g. encrypted using Triple DES), decrypt and decompress the composed messages, re-format the composed messages if desired so that they will appear to have originated from the user's computer 262a, and reroute the composed messages to the message server 268 for delivery.

Certain properties or restrictions associated with messages that are to be sent from and/or received by the portable electronic device 100 can be defined (e.g. by an administrator in accordance with IT policy) and enforced by the management server 272. These may include whether the portable electronic device 100 may receive encrypted and/or signed messages, minimum encryption key sizes, whether outgoing messages must be encrypted and/or signed, and whether copies of all secure messages sent from the portable electronic device 100 are to be sent to a pre-defined copy address, for example.

The management server 272 may also be adapted to provide other control functions, such as only pushing certain message information or pre-defined portions (e.g. "blocks") of a message stored on the message server 268 to the portable electronic device 100. For example, in some cases, when a message is initially retrieved by the portable electronic device 100 from the message server 268, the management server 272 may push only the first part of a message to the portable electronic device 100, with the part being of a pre-defined size (e.g. 2 KB). The user can then request that more of the message be delivered in similar-sized blocks by the management server 272 to the portable electronic device 100, possibly up to a maximum pre-defined message size. Accordingly, the management server 272 facilitates better control over the type of data and the amount of data that is communicated to the portable electronic device 100, and can help to minimize potential waste of bandwidth or other resources.

The MDS 274 encompasses any other server that stores information that is relevant to the corporation. The mobile data server 274 may include, but is not limited to, databases, online data document repositories, customer relationship management (CRM) systems, or enterprise resource planning (ERP) applications. The MDS 274 can also connect to the Internet or other public network, through HTTP server 275 or other suitable web server such as an File Transfer Protocol (FTP) server, to retrieve HTTP webpages and other data. Requests for webpages are typically routed through MDS 274 and then to HTTP server 275, through suitable firewalls and other protective mechanisms. The web server then retrieves the webpage over the Internet, and returns it to MDS 274. As described above in relation to management server 272, MDS 274 is typically provided, or associated, with an encoder 277 that permits retrieved data, such as retrieved webpages, to be compressed, using any suitable compression technology (e.g. YK compression, and other known techniques), and encrypted (e.g. using an encryption technique such as DES, Triple DES, or AES), and then pushed to the portable electronic device 100 via the shared network infrastructure 224 and the wireless network 200.

The contact server 276 can provide information for a list of contacts for the user in a similar fashion as the address book on the portable electronic device 100. Accordingly, for a given contact, the contact server 276 can include the name, phone number, work address and e-mail address of the contact, among other information. The contact server 276 can also provide a global address list that contains the contact information for all of the contacts associated with the host system 250.

It will be understood by persons skilled in the art that the management server 272, the MDS 274, the HTTP server 275, the contact server 276, the device manager module 278, the data store 284 and the IT policy server 286 do not need to be implemented on separate physical servers within the host system 250. For example, some or all of the functions associated with the management server 272 may be integrated with the message server 268, or some other server in the host system 250. Alternatively, the host system 250 may comprise multiple management servers 272, particularly in variant implementations where a large number of portable electronic devices need to be supported.

The device manager module 278 provides an IT administrator with a graphical user interface with which the IT administrator interacts to configure various settings for the portable electronic devices 100. As mentioned, the IT administrator can use IT policy rules to define behaviors of certain applications on the portable electronic device 100 that are permitted such as phone, web browser or Instant Messenger use. The IT policy rules can also be used to set specific values for configuration settings that an organization requires on the portable electronic devices 100 such as auto signature text, WLAN/VoIP/VPN configuration, security requirements (e.g. encryption algorithms, password rules, etc.), specifying themes or applications that are allowed to run on the portable electronic device 100, and the like.

As indicated above, the portable electronic device 100 includes the Personal Information Manager (PIM) 142 that includes functionality for organizing and managing data items of interest to the user, such as, but not limited to, e-mail, contacts, calendar event records, voice mails, appointments, and task items. PIM applications include, for example, calendar, address book, tasks and memo applications.

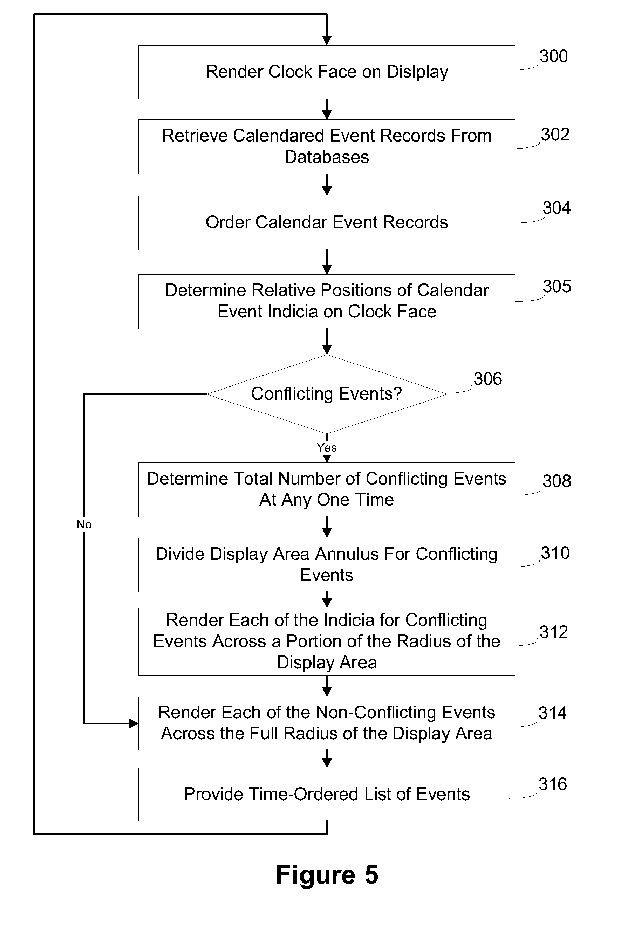

Referring now to Figure 5, a method of controlling the portable electronic device 100 according to the present disclosure includes retrieving, from a memory at the portable electronic device 100, calendar-event records containing data for corresponding calendar events that satisfy a set of time constraints, the data for each calendar-event record including a start time and an end time for the corresponding calendar event, and for each of the retrieved calendar-event records, rendering on a display a corresponding calendar-event indicia positioned, based on the start time and the end time for that calendar event, within a predetermined rotary-clock region of the display.

It will be appreciated that a calendar event record, for a corresponding calendar event, can be created or sent to the portable electronic device 100 for storage. It will also be understood that the calendar application is used for providing a graphical user interface (GUI) for user-creation of calendar event records for corresponding calendar events such as appointments, or meetings, for storage of calendar event records in a database, for example, at the flash memory 108 and for viewing, on the display device 110, calendar event indicia, corresponding to calendar events. Each calendar event record includes a variety of information as will be described further below. Thus, the calendar event record can be stored upon receipt of a save command from a calendar graphical user interface after user-entry of the calendar event details.

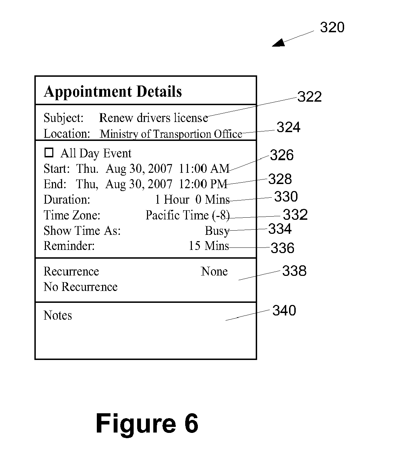

In the present example, a user wishing to add a calendar event record using the portable electronic device 100 can select an option to create a new calendar event record from a menu list of selectable options in the calendar user interface. Selection of such an option causes a new screen to be rendered in the calendar GUI for composition of a new calendar event record such as that shown in Figure 6. The exemplary GUI for composition of a new calendar event record shown in Figure 6 includes fields for user-entry of data in the form of calendar event details and is generally indicated by the numeral 320. The data is entered by the user of the portable electronic device 100 using input devices such as the trackball 115 and keyboard 116. The fields in the exemplary screen shot of Figure 6 include a "Subject" field 322, a "Location" field 324, a "Start" field 326, an "End" field 328, a "Duration" field 330, a "Time Zone" field 332, a "Show Time As" field 334, a "Reminder" field 336, a "Recurrence" field 338 and a "Notes Field" 340. In the example of Figure 10, the calendar event details include "Renew drivers license" populating the "Subject" field 322, "Ministry of Transportation Office" populating the "Location" field 324, July 30, 2008, 8:30 AM populating the "Start" field 326, July 30, 2008, 9:00 AM populating the "End" field 328, and 30 Min populating the "Duration" field 330, as indicated. The "Time Zone" field 332 is populated with "Pacific Time", the "Show Time As" field 334 is populated with "Busy" in the calendar view and a reminder is indicated for 15 minutes prior the start time of the calendar event in the "Reminder" field 336.

The user populates the fields of the calendar GUI for composition of a new calendar event record and, when completed, saves the new calendar event record by, for example, selecting an option to save from a submenu list of options in the calendar GUI. The new calendar event record is therefore stored in the calendar database in the flash memory 108 at the portable electronic device 100. A graphical representation of the calendar event record corresponding to a calendar event is rendered, in, for example, a calendar day, week or month view, in the appropriate time period 366 according to the time and date defined in the "Start" field 402 and the "End" field 404 of the calendar event record.

Storage of the calendar event record by composition at the portable electronic device is only one example of a method of storing a calendar event record. As indicated above, the calendar event record can be stored at the portable electronic device in other ways. For example, a calendar event record can be composed on the user's desktop computer 262a and stored in a calendar database at the data store 284. A corresponding copy of the calendar event record is wirelessly transmitted to the portable electronic device 100 for storage in the flash memory 108. Alternatively, a calendar event record can be composed on the user's desktop computer 262a and a corresponding copy is then transferred to the portable electronic device 100 by serial or USB connection, for example, by docking the portable electronic device 100 in the cradle 264. In yet another example, the calendar event record can be received at the portable electronic device 100 in the form of an invitation to a meeting or other calendar event. Regardless of how the calendar event record is received at the portable electronic device 100, calendar event records including respective calendar event data in the form of calendar event details are stored in a calendar event database in the flash memory 108 at the portable electronic device 100. Where calendar event records are received from more than one user account, it is contemplated that the calendar event records can be stored in association with the respective user account. Thus, calendar event records can be received at the portable electronic device 100 in any suitable manner.

The method of controlling the portable electronic device 100 will now be further described with reference to Figure 5. At step 300, a representation of an analog-style clock face is rendered on the display device 110 of the portable electronic device 100. The clock face includes hour and minute hands for displaying the current time according to an internal clock at the portable electronic device 100. Thus, the clock face rendered on the display device 110 is updated regularly to accurately show the current time.

Next, calendar event records at the portable electronic device 20 that satisfy a set of time constraints are retrieved from the flash memory 108 (or the memory in which the calendar event records are stored). The constraints define a time period beginning with the current time on an internal clock at the portable electronic device 100. In the present embodiment, the constraints define a time period of twelve hours beginning at the current time according to the internal clock. Thus, all calendar event records that have a start time or an end time, or both a start time and an end time that falls within the 12 hour period beginning with the current time are retrieved from memory (step 302).

The order of calendar event records is then determined at step 304 based first on start time and date of each corresponding calendar event and then based on end time and date of each corresponding calendar event. Thus, calendar event records are ordered from earliest start time and date to latest start time and date. In the event that multiple calendar events have the same start time, the corresponding calendar event records are ordered from earliest end time to latest end time.

Using the start time and end time of each of the calendar events according to the corresponding calendar event records, relative positions of calendar event indicia in the form of annular sectors for representing the calendar events at the clock face are determined (step 305) and a determination is made as to whether or not any of the calendar events conflict (step 306). Specifically, the start time and date and end time and date from each calendar event records retrieved at step 302 is compared to the start time and date and end time and date from each of the other calendar event records to determine whether any of the events have overlapping time periods. Thus, if the start time and date from any calendar event record falls on the start time and date from any other calendar event record, or within the time period between the start time and date and end time and date from any other calendar event record, the corresponding calendar events have overlapping time periods and therefore conflict. Alternatively, it can be determined if an end time and date from any calendar event record falls within the time period between the start time and date and end time and date from another calendar event record or on the end time and date from another calendar event record and, if so, the corresponding calendar events have overlapping time periods and therefore conflict. The calendar event records corresponding to the conflicting calendar events are therefore determined at step 306.

If there are no conflicting calendar events, the method proceeds to step 314 (described below). If, however, it is determined that there are conflicting calendar events, the method proceeds to step 308. It will be appreciated that more than one calendar event can conflict with another calendar event. The total number of conflicting calendar events at any one time in the period defined by the constraints is then determined at step 308. Thus, if two calendar events are scheduled at any one time, it is determined that the total number of conflicting calendar events at that time is two. If, however, three calendar events are scheduled at any one time, it is determined that the total number of conflicting calendar events at that time is three.

A display area on the display device 110 of the portable electronic device 100 for rendering calendar event indicia for the corresponding calendar events in the form of an annulus on the clock face is then divided by the total number of conflicting calendar events at any one time as determined at step 308 to provide concentric annuli (step 310). The radial extent of each annulus of the concentric annuli is therefore determined by the number of conflicting calendar events at any one time. Thus, if it is determined that there is a maximum of two conflicting calendar events at any one time, then the annulus on the clock face in which calendar event indicia is rendered is divided into two concentric annuli. Similarly, if it is determined that there is a maximum of three conflicting calendar events at any one time, then the annulus on the clock face in which calendar event indicia is rendered is divided into three concentric annuli. It will be appreciated that the number of annuli, and thus the number of conflicting calendar events for which calendar event indicia can be separately rendered at any one time, may be limited to any suitable number. For example, the number of annuli can be limited to four and therefore corresponding calendar event indicia for more than four conflicting calendar events at any one time is not separately rendered.

The calendar event indicia for each conflicting calendar event is then rendered within the clock face (step 312) as a respective annular sector within a respective one of the annuli on the clock face. The annular sectors for conflicting calendar events can be rendered, for example, with an annular sector for each subsequent one of the corresponding calendar event records in the order determined at step 304 rendered in the innermost one of the concentric annuli, as divided at step 310, in which there is no conflicting calendar event. Each one of the conflicting calendar events therefore has a corresponding sector within one of the annuli based on the start time and date and end time and date of the calendar event. The beginning and ending of each annular sector in relation to the clock face corresponds to the start time and end time, respectively, of the corresponding calendar event. Thus, the start time and end time of the each calendar event determines an angular extent of the corresponding annular sector.

Next, the remaining indicia for the retrieved calendar event records are rendered within the clock face (step 314). The corresponding calendar events for these calendar event records are not conflicting calendar events and are therefore rendered as sectors in the undivided annulus on the clock face. Again, the indicia for each of the calendar events is rendered as a sector, based on the start time and date and end time and date in relation to the clock face, within the full annulus. The beginning and ending of each annular sector corresponds to the start time and end time, respectively, of the corresponding calendar event.

The radial extent of each annular sector is therefore determined by whether or not the corresponding calendar event conflicts with any other calendar event and the number of other calendar events that the corresponding calendar event conflicts with at any one time. Thus, the radial extent of each annular sector is limited such that the corresponding annular sectors for conflicting calendar events do not overlap.

A time-ordered list of labels for the calendar events is then provided adjacent the clock face, such as under the clock face on the display device 110. The labels are provided in the same order as the order of the corresponding calendar event records as determined at step 304. In the present embodiment, the labels in the list may include the subjects obtained from the "Subject" field of the corresponding calendar event records and locations obtained from the "Location" field of the corresponding calendar event records. Each label in the list is associated with the sector rendered in the annulus on the clock face. Each label in the list can also be, for example, colour-coded to clearly illustrate the association with the sector in the annulus on the clock face. Thus, the sector in the annulus can be rendered in the same colour as a background colour for the associated one of the labels in the list. Each of the annular sectors on the clock face or labels in the time-ordered list can be selectable for displaying further calendar event details from the corresponding calendar event record without having to navigate through further menus and submenus.

The clock face along with annular sectors for the corresponding calendar events rendered within the clock face and labels in the time-ordered list provide an "at-a-glance" view of the current time and times of scheduled calendar events. The information can be provided in the limited display area on the portable electronic device 100 and can be provided, for example, in a home screen, in a screen that is generated when the portable electronic device 100 is not in use, for example after a period of time passes during which user-input is not received at the portable electronic device 100 or when, for example, the portable electronic device is set in a cradle or in a holster. The screen can also be generated for display, for example, in a window in a device cover for a flip-phone style portable electronic device, in response to closing of the cover of the portable electronic device 100.

It will be appreciated that the method is repeated as the clock is regularly updated to maintain a current time on the display device 110 and to update the display to show all annular sectors corresponding to calendar events that fall within the time constraints.

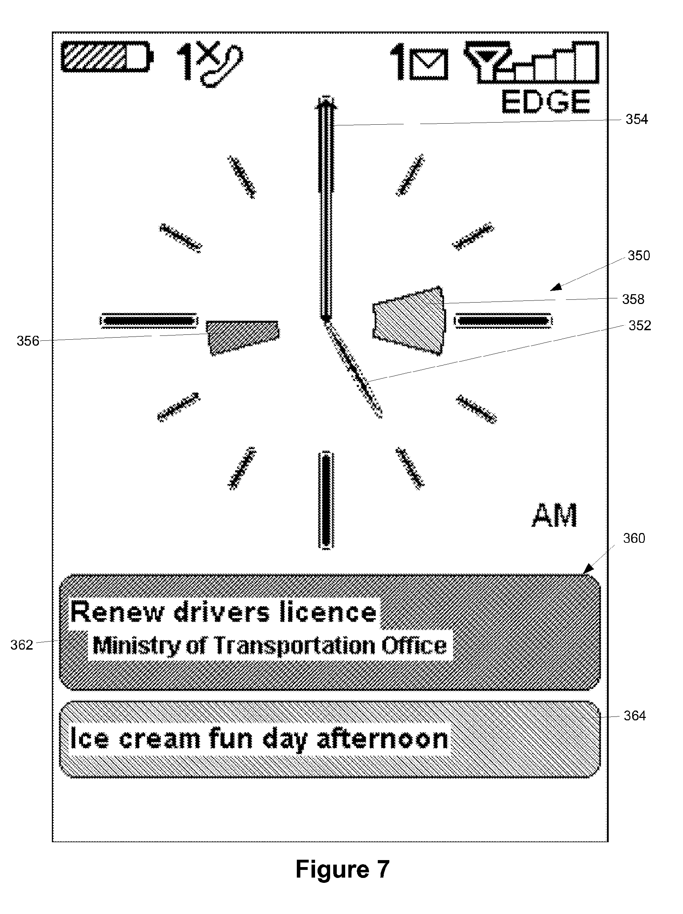

Continued reference is made to Figure 5 with additional reference to Figure 7 to describe a specific example in accordance with the method of controlling a portable electronic device according to the present disclosure.

Calendar event records are received and stored in the flash memory 108 at the portable electronic device 100. As described above, the calendar event records can be received at the portable electronic device 100 in any suitable manner such as by creating the calendar event records at the portable electronic device 100 or by receiving the calendar event records by wireless or wired transmission. In the present example, at least two calendar event records are stored at the portable electronic device 100. These calendar event records include a calendar event record with a start time of 8:30AM populating a portion of the "Start" field, an end time of 9:00AM populating a portion of the "End" field, "Renew drivers license" populating the "Subject" field and "Ministry of Transportation Office" populating the "Location" field. Other suitable data can populate the remainder of the fields of the calendar event record stored at the portable electronic device 100.

A second calendar event record is also stored at the portable electronic device. The second calendar event record includes suitable data populating fields including a start time of 2:30PM populating a portion of the "Start" field, an end time of 3:30PM populating a portion of the "End" field, "Ice cream fun day afternoon" populating the "Subject" field and no data populating the "Location" field.

An analog clock face 350, including an hour hand 352 and a minute hand 354, is rendered on the display device 110 at the portable electronic device 100, accurately showing the current time according to the internal clock at the portable electronic device 100 (step 300).

Next, calendar event records at the portable electronic device 20 that satisfy a set of time constraints that define a time period of twelve hours beginning at the current time according to the internal clock are retrieved from the flash memory 108. Thus, all calendar event records that have a start time or an end time, or both a start and an end time that falls within the 12 hour period beginning with the current time are retrieved from the flash memory 108 (step 302). In the present example, the two calendar event records including the "Renew drivers license" and "Ice cream fun day afternoon" correspond to calendar events that fall within the 12-hour time period beginning with the current time and are therefore retrieved from the flash memory 108.

After retrieving the two calendar event records, the two calendar event records are ordered based first on start time and date of each calendar event and then based on end time and date of each calendar event. Thus, calendar event records are ordered from earliest start time and date to latest start time and date. In the present example, the "Renew drivers license" calendar event record is first in the order, based on start time and the "Ice cream fun day afternoon" calendar event record is second.

Using the start time and end time from each of the calendar event records, relative positions of annular sectors for representing the calendar events at the clock face are determined (step 305). Thus, the start of each annular sector and the end of each annular sector is determined in relation to the clock face. A determination is then made as to whether or not any of the calendar events conflict (step 306). Specifically, the start time and date and end time and date from each of the calendar event records retrieved at step 302 is compared to the start time and date and end time and date from each of the other calendar event records to determine whether any of the calendar events have overlapping time periods. Thus, if the start time and date of any calendar event falls on the start time and date of any other calendar event, or within the time period between the start time and date and end time and date of any other calendar event, the calendar events have overlapping time periods and therefore conflict. Since there are no conflicting calendar events, the method proceeds to step 314.

At step 314, the calendar indicia is rendered within the clock face 350. The calendar event indicia is rendered as sectors in the undivided annulus in the clock face 350. Thus, a first annular sector 356 corresponds with the first calendar event (Renew drivers license) and a second annular sector 358 corresponds with the second calendar event (Ice cream fun day afternoon). Thus, each a corresponding annular sector is rendered, for each respective calendar event based on the start time and date and end time and date in relation to the clock face, within the full annulus. The beginning and ending of each annular sector corresponds to the start time and end time, respectively, of the corresponding calendar event.

A time-ordered list 360 of labels for the calendar events, for which corresponding calendar event records were retrieved, is then provided under the clock face 350, in the order as determined at step 304. In the present embodiment, the labels each include the "Subject" field from each of the corresponding calendar event records and the "Location" field from each of the corresponding calendar event records. Thus, the first label 362 is displayed with the subject and location. The second label 364 is displayed with the subject. In the present example the "location" field of the calendar event record that corresponds with the second label, "Ice cream fun day afternoon", is not populated and therefore no location is provided in the time-ordered list of labels 360.

Each label is associated with a corresponding sector rendered in the annulus on the clock face by colour coding to clearly illustrate the association with the annular sector on the clock face. Thus, the first annular sector 356 is rendered in the same colour as the first label 362 in the list 360. Similarly, the second annular sector 358 is rendered in the same colour as the second label 364 in the list 360, and a different colour than the first annular sector 356.

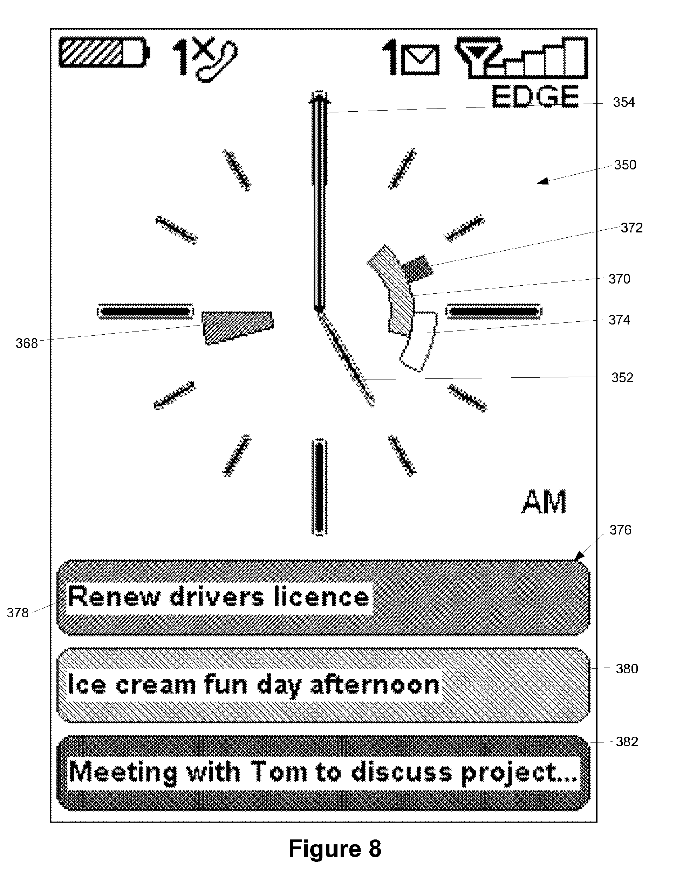

Continued reference is made to Figure 5 with additional reference to Figure 8 to describe another example in accordance with the method of controlling a portable electronic device according to the present disclosure.

Again, calendar event records are received and stored in the flash memory 108 at the portable electronic device 100. In the present example, at least four calendar event records are stored at the portable electronic device 100, each with suitable data populating the fields of the calendar event record stored at the portable electronic device 100.

An analog clock face 350, including an hour hand 352 and a minute hand 354, is rendered on the display device 110 at the portable electronic device 100, accurately showing the current time according to the internal clock at the portable electronic device 100 (step 300).

Next, calendar event records at the portable electronic device 20 that satisfy a set of time constraints that define a time period of twelve hours beginning at the current time according to the internal clock are retrieved from the flash memory 108. Thus, all calendar event records that have a start time or an end time, or both a start and an end time that falls within the 12-hour period beginning with the current time are retrieved from the flash memory 108 (step 302). In the present example, the four calendar event records referred to above, correspond with calendar events that fall within the 12-hour time period beginning with the current time, and are therefore retrieved from the flash memory 108.

After retrieving the four calendar event records, the four calendar event records are ordered based first on start time and date of each calendar event and then based on end time and date of each calendar event. Thus, calendar event records are ordered from earliest start time and date to latest start time and date (step 304).

Using the start time and end time of each of the calendar events as determined from the calendar event records, relative positions of calendar event indicia in the form of annular sectors for representing the calendar events at the clock face are determined (step 305). Thus, the start of each annular sector and the end of each annular sector is determined in relation to the clock face. A determination is then made as to whether or not any of the calendar events conflict (step 306). In the present example, it is determined that there are calendar events that conflict and, in fact, three of the four calendar events conflict. The total number of conflicting calendar events at any one time in the period defined by the constraints is then determined at step 308. In the present embodiment, it is determined that the maximum number of conflicting calendar events at any given time in the 12-hour period is two.

At step 310, the display area on the display device 110 of the portable electronic device 100, for rendering the calendar event indicia in the form of sectors in an annulus on the clock face, is divided by two (the total number of conflicting calendar events at any one time as determined at step 308).

The annular sectors corresponding to the conflicting calendar events are then rendered within the clock face (step 312). In the present embodiment, there are three conflicting calendar event records that correspond to conflicting calendar events including a second calendar event, a third calendar event and a fourth calendar event in the list determined at step 304. The sectors are rendered, for example, with each subsequent one of the conflicting calendar events based on the order of corresponding calendar event records determined at step 304 rendered as a sector in the innermost one of the concentric annuli, as divided at step 310, in which there is no sector corresponding to another conflicting calendar event. Thus, the second calendar event has a corresponding second annular sector 370 rendered in the innermost one of the concentric annuli as shown. The third calendar event conflicts with the second calendar event and therefore the corresponding third annular sector 372 is rendered in the next available one of the annuli. The fourth calendar event also conflicts with the second calendar event but does not conflict with the third calendar event. Thus, the fourth calendar event has a corresponding sector that is rendered as a fourth annular sector 374 in the same one of the annuli as the third sector 372. The beginning and ending of each of the annular sectors 370, 372, 374 corresponds to the start time and end time, respectively, of the calendar event relative to the clock face.

Next, the annular sectors for the remaining calendar event records are rendered within the clock face (step 314). In the present example, the first calendar event is not a conflicting calendar event and therefore the corresponding first sector 368 is rendered in the undivided annulus in the clock face 350.

A time-ordered list in the form of labels for the corresponding calendar events is then provided under the clock face on the display device 110. The labels are provided in the same order as corresponding calendar event records determined at step 304. In the present embodiment only the subject taken from the "Subject" field of the respective calendar event records is shown in the time-ordered list 376. The time-ordered list 376 includes the first label 378 corresponding to the first calendar event, the second label 380 corresponding to the second calendar event and the third label 382 corresponding to the third calendar event. With the limited space available, the label corresponding to the fourth calendar event 384 is not shown in the time-ordered list 376.

Each label is associated with the corresponding sector rendered in the annulus on the clock face by colour coding to clearly illustrate the association with the sector in the annulus on the clock face. Thus, the first annular sector 368 is rendered in the same colour as the first label 378 in the list 376. Similarly, the second annular sector 370 is rendered in the same colour as the second label 380 in the list 376, and a different colour than the first annular sector 368. The third annular sector 372 is rendered in the same colour as the third label 382 and a different colour than the first annular sector 368 and the second annular sector 370. Finally, the fourth annular sector 374 is rendered in a different colour than the first annular sector 368, the second annular sector 370 and the third annular sector 372.

In the preceding description, for purposes of explanation, numerous details are set forth in order to provide a thorough understanding of the embodiments of the present application. However, it will be apparent to one skilled in the art that certain specific details are not required. In other instances, features, including functional features, are shown in block diagram form in order not to obscure the description. Further, certain Figures and features are simplified for ease of understanding and explanation. In some cases, for example, specific details are not provided as to whether the embodiments described herein are implemented as a software routine, hardware circuit, firmware, or a combination thereof. Embodiments can be represented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment. Those of ordinary skill in the art will appreciate that other instructions and operations necessary to implement the described features can also be stored on the machine-readable medium. Software running from the machine-readable medium can interface with circuitry to perform the described tasks.

The rendering of the representations of calendar events on a clock face for providing a view of the calendar events in relation to the current time along with details of at least one of the calendar events such as a time-ordered list, provides a rendering of pertinent calendar data in addition to a current time for a 12-hour period in a single screen view of the portable electronic device. Thus, the time as well as times of scheduled calendar events can be determined from a single view on a portable electronic device with a limited display area. It will be appreciated that processing time and battery power are used to render screens on the display of the portable electronic device as the processor functions to determine what is rendered and where. Thus, each new screen that is rendered in, for example, a calendar GUI uses additional processing time and power consumption. By rendering a clock face along with representations of calendar events on the clock face as well as details of at least the next one of the calendar event, the pertinent information can be determined from a single screen, which can be a home screen. With fewer screens rendered to provide pertinent information, there is therefore a corresponding savings in processing time and power consumption, resulting in increased battery life between charging of the battery at the portable electronic device.

While the embodiments described herein are directed to particular implementations of the electronic device and method of controlling the electronic device, the above-described embodiments are intended to be examples. It will be understood that alterations, modifications and variations may be effected without departing from the scope of the present disclosure.

## Claims

1. A method of controlling an electronic device, the method comprising:
retrieving, from a memory at the electronic device, one ore more calendar-event records containing data for corresponding calendar events that satisfy a set of time constraints, the data for each calendar-event record having a start time and an end time for the corresponding calendar event; and
for each of the retrieved calendar-event records, rendering, on a display at the electronic device, a corresponding calendar-event indicia positioned, based on the start time and the end time for that calendar event, within a predetermined rotary-clock region of the display.

2. The method according to claim 1, wherein the set of time constraints requires that calendar events have respective start and end times within a common 12-hour period.

3. The method according to claim 1 or claim 2, comprising, for each of the retrieved calendar-event records, determining a respective angular extent based on the start time and the end time for that calendar event.

4. The method according to claim 3, wherein the corresponding calendar-event indicia for each of the calendar-event records comprises a respective annular sector within the predetermined rotary-clock region of the display, the annular sector for each of the calendar-event records having the respective angular extent.

5. The method according to claim 4, comprising determining a respective radial extent for each annular sector.

6. The method according to claim 5, wherein determining the respective radial extent for each annular sector comprises:
determining conflicting ones of the calendar events; and
determining respective radial extents of each annular sector for conflicting calendar events so that respective annular sectors for conflicting calendar events have non-overlapping radial extents.

7. The method according to claim 6, wherein determining respective radial extents of each annular sector comprises determining radial extents of concentric annuli for conflicting calendar events based on an order of the calendar events.

8. The method according to claim 7, wherein the order of the calendar events is based firstly on the respective start times of the calendar events.

9. The method according to claim 8, wherein the order of the calendar events is based secondly on the respective end times of the calendar events.

10. The method according to any one of claims 1 to 9, comprising rendering a representation of an analog clock having a representation of an hour hand positioned, according to a current time, in the predetermined rotary-clock region of the display.

11. The method according to claim 10, wherein for each of the retrieved calendar event records, the corresponding calendar event indicia is positioned, based on the start time and the end time for that calendar event, relative to the representation of the analog clock.

12. The method according to claim 11, comprising rendering, proximate the representation of the analog clock, labels corresponding to at least one of the calendar events, each label providing data from the corresponding calendar-event record.

13. The method according to claim 12, wherein the labels are rendered according to an order of the calendar events.

14. The method according to claim 13, wherein providing data from the corresponding calendar-event record comprises providing a subject from the corresponding calendar event record.

15. The method according to any one of claims 12 to 14, wherein each rendered label is colour-coded to match a colour of the corresponding calendar-event indicia.

16. An electronic device comprising:
an display device;
an input device;
a memory device;
a processor connected to the memory device, the input device, and the display device; and
an application stored in the memory device for execution by the processor for causing the electronic device to implement the steps of the method of any one of claims 1 to 15.

17. A computer readable medium having computer-readable code embodied therein for execution by a processor at a computing device for causing the computing device to implement the steps of the method of any one of claims 1 to 15.

## Amended claims

### Amended claims in accordance with Rule 137(2) EPC.

**1.** A method of controlling an electronic device, the method comprising:
retrieving, from a memory at the electronic device, one or more calendar-event records containing data for corresponding calendar events that satisfy a set of time constraints, the data for each calendar-event record having a start time and an end time for the corresponding calendar event; and
for each of the retrieved calendar-event records, determining a respective annular sector, within a predetermined rotary-clock region of the display, based on the start and end time for that calendar event and determining a respective radial extent for each annular sector by determining conflicting ones of the calendar events and determining respective radial extents of each annular sector for conflicting calendar events so that respective annular sectors for conflicting calendar events have non-overlapping radial extents;
rendering, on a display at the electronic device, a corresponding calendar-event indicia comprising the respective annular sector.

**2.** The method according to claim 1, wherein the set of time constraints requires that calendar events have respective start and end times within a common 12-hour period.

**3.** The method according to claim 1, wherein determining respective radial extents of each annular sector comprises determining radial extents of concentric annuli for conflicting calendar events based on an order of the calendar events.

**4.** The method according to claim 3, wherein the order of the calendar events is based firstly on the respective start times of the calendar events.

**5.** The method according to claim 4, wherein the order of the calendar events is based secondly on the respective end times of the calendar events.

**6.** The method according to any one of claims 1 to 5, comprising rendering a representation of an analog clock having a representation of an hour hand positioned, according to a current time, in the predetermined rotary-clock region of the display.

**7.** The method according to claim 6, wherein for each of the retrieved calendar event records, the corresponding calendar event indicia is positioned, based on the start time and the end time for that calendar event, relative to the representation of the analog clock.

**8.** The method according to claim 7, comprising rendering, proximate the representation of the analog clock, labels corresponding to at least one of the calendar events, each label providing data from the corresponding calendar-event record.

**9.** The method according to claim 8, wherein the labels are rendered according to an order of the calendar events.

**10.** The method according to claim 9, wherein providing data from the corresponding calendar-event record comprises providing a subject from the corresponding calendar event record.

**11.** The method according to any one of claims 8 to 10, wherein each rendered label is colour-coded to match a colour of the corresponding calendar-event indicia.

**12.** The method according to claim 7, comprising rendering, proximate the representation of the analog clock, labels corresponding to multiple ones of the calendar events, each label providing data from the corresponding calendar-event record.

**13.** The method according claim 12, wherein each rendered label is colour-coded to match a colour of the corresponding calendar-event indicia.

**14.** An electronic device comprising:
an display device;
an input device;
a memory device;
a processor connected to the memory device, the input device, and the display device; and
an application stored in the memory device for execution by the processor for causing the electronic device to implement the steps of the method of any one of claims 1 to 15.

**15.** A computer readable medium having computer-readable code embodied therein for execution by a processor at a computing device for causing the computing device to implement the steps of the method.
